# EUROPÄISCHE PATENTSCHRIFT

(11) **EP 3 368 466 B1**
(45) Veröffentlichungstag und Bekanntmachung des Hinweises auf die Patenterteilung: **15.09.2021**
(21) Anmeldenummer: 16788135.8
(22) Anmeldetag: 31.10.2016
(51) Int. Cl.: B67C 3/00, B67C 7/00

(54) **VORRICHTUNG ZUM BEHANDELN VON BEHÄLTERN**
DEVICE FOR TREATING CONTAINERS
DISPOSITIF POUR TRAITEMENT DES RÉCIPIENTS

(30) Priorität: 30.10.2015 DE 102015118619
(43) Veröffentlichungstag der Anmeldung: 05.09.2018
(73) Patentinhaber: KRONES AG, 93073 Neutraubling (DE)
(72) Erfinder: SOELLNER, Juergen, 93073 Neutraubling (DE); BRAUN, Franz, 93073 Neutraubling (DE); MUELLER, Holger, 93073 Neutraubling (DE); LANDLER, Bruno, 93073 Neutraubling (DE)
(74) Vertreter: Nordmeyer, Philipp Werner
(86) Internationale Anmeldenummer: PCT/EP2016/076192
(87) Internationale Veröffentlichungsnummer: WO 2017/072352

(56) Entgegenhaltungen:
- EP-A1- 0 436 042
- EP-A2- 2 409 948
- DE-A1-102008 020 121
- US-A- 6 082 418

## Beschreibung

### Technisches Gebiet

Die vorliegende Erfindung betrifft eine Vorrichtung zum Behandeln von Behältern, bevorzugt zum Befüllen und Verschließen von Behältern in Abfüllanlagen.

### Stand der Technik

Vorrichtungen zum Behandeln von Behältern, bevorzugt zum Befüllen und Verschließen von Behältern in Abfüllanlagen, sind aus dem Stand der Technik bekannt. Dabei werden Behälter, bevorzugt Flaschen oder Dosen, einer Behandlung, bevorzugt einem Befüllen und/oder einem Verschließen unterzogen.

Während des Betriebs solcher Vorrichtungen kommt es vor, dass Behälter nicht ordnungsgemäß befüllt werden und aus dem Behälterpfad auszuschleusen sind. Insbesondere bei der Verarbeitung von Dosen müssen fehlerhaft befüllte Dosen vor dem Verschließer ausgeschleust werden, da Dosenverschließer keine Leerdosen oder gering befüllte Dosen verarbeiten können. Bei Reinraum-Füllern, bei welchen das Befüllen in einer Isolatorkammer unter Reinraumatmosphäre durchgeführt wird, insbesondere bei Anlagen der Trockenaseptik, werden die Behälter jedoch erst nach der Isolatorkammer ausgeleitet. Eine Ausschleusung in der Isolatorkammer ist hier nicht möglich, da für die auszuleitenden Behälter nicht genügend Platz zur Verfügung steht. Dadurch besteht unter anderem die Gefahr, dass ausgeschleuste Behälter mit bewegten Komponenten des Füllers in Kontakt kommen und das Befüllen weiterer Behälter beeinträchtigen.

Die Behälter können während des Betriebs auch nicht aus der Isolatorkammer entfernt werden, da beim Öffnen einer Ausleitöffnung der Isolatorkammer zum Ausleiten eines ausgeschleusten Behälters aus der Isolatorkammer, wie beispielsweise in der DE 10 2008 020 121 A1 gezeigt, der Überdruck im Inneren der Isolatorkammer zusammenbrechen und die Anlage unsteril werden würde.

Ferner wird beim Verschließen von Behältern mit einem Behälterdeckel, insbesondere bei dem Verschließen von Dosen, zum Reduzieren beziehungsweise Entfernen des Sauerstoffs im Kopfraum oftmals eine Deckelbegasung vorgenommen. Hierbei wird die Unterseite der Deckel vor dem eigentlichen Verschließvorgang mit einem Behandlungsgas, zumeist Kohlenstoffdioxid (im Folgenden CO₂), begast. Durch die Begasung der Deckel reichert sich in der Umgebung der Begasungsvorrichtung überschüssiges CO₂ an, welches nach dem Verschließvorgang im Verschließer verbleibt. Um ein Überschreiten der maximalen Arbeitsplatzkonzentration (MAK) des Behandlungsgases im Bereich um den Verschließer beziehungsweise in der Halle zu verhindern, ist am Auslauf des Verschließers oberhalb des Behälterpfads, über welchen die Behälter nach dem Verschließen aus dem Verschließer ausgeleitet werden, eine Absaugung installiert, über die das CO₂abgesaugt und aus der Halle ausgeleitet wird.

Da CO₂ eine größere molare Masse als Sauerstoff und Stickstoff aufweist, sinkt ein Teil der CO₂-Moleküle schwerkraftbedingt nach unten ab und bildet einen CO₂-See auf der Tischplatte des eingehausten Verschließers. Das CO₂entweicht dabei über Drainageöffnungen der Tischplatte, welche für eine Ableitung von übergeschwapptem Produkt, Schaum, Wasser und Reinigungsmedium vorgesehen sind, in die Umgebung des Verschließers. So ist über die am Auslauf des Verschließers vorgesehene Absaugung nicht sichergestellt, dass es zu keiner Überschreitung des MAK-Wertes in Bezug auf das CO₂kommt. Weiterhin können über die Absaugung nach oben auch Produktaerosole mit abgesaugt werden, welche sich in den Leitungen und der Pumpeinheit der Absaugung ablagern können, so dass sich mit der Zeit Biofilme in den Leitungen bilden können. Die nach oben ausgerichtete Absaugung ist jedoch kein Bestandteil der bei einer Reinigung gereinigten Komponenten der Vorrichtung, so dass der Aufbau eines Biofilms in der Absaugung und eine damit einhergehende Kontamination des Verschließers nicht verhindert werden kann.

Oftmals treten die oben beschriebenen Probleme bei solchen Vorrichtungen in Kombination auf, wobei eine Verbesserung der Vorrichtung hinsichtlich einer der Problemstellungen eine Verschlechterung hinsichtlich der anderen vorliegenden Probleme mit sich bringt.

Die US 6,082,418 A beschreibt eine Vorrichtung zum aseptischen Befüllen von Behältern. Die DE 10 2008 020 121 A1 beschreibt eine Vorrichtung zum Handhaben von Behältern. Die EP 0 436 042 A1 beschreibt ein Verfahren zur Sterilisation von Behältern. Die EP 2 409 948 A2 beschreibt eine Vorrichtung gemäß dem Oberbegriff des Anspruchs 1.

### Darstellung der Erfindung

Ausgehend von dem bekannten Stand der Technik ist es eine Aufgabe der vorliegenden Erfindung, eine verbesserte Vorrichtung zum Behandeln von Behältern bereitzustellen, die insbesondere eine verbesserte Arbeitsplatzsicherheit ermöglicht.

Die Aufgabe wird durch eine Vorrichtung zum Behandeln von Behältern mit den Merkmalen des Anspruchs 1 gelöst. Vorteilhafte Weiterbildungen ergeben sich aus den Unteransprüchen.

Entsprechend wird eine Vorrichtung zum Behandeln von Behältern vorgeschlagen, welche eine Isolatorkammer, in der die Behandlung der Behälter erfolgt, und mindestens einen am Boden der Isolatorkammer angebundenen Ablauf zum Ableiten von Flüssigkeiten umfasst. Erfindungsgemäß ist an dem mindestens einen Ablauf eine Absaugvorrichtung zum Absaugen von Gasen aus der Isolatorkammer angebunden.

Durch das Vorsehen der Isolatorkammer, in welcher die Behandlung der Behälter durch mindestens eine Behandlungseinheit erfolgt, kann darin ein gegenüber der Umgebung definiertes beziehungsweise erhöhtes Hygieneniveau eingestellt werden und das Hygienekonzept der jeweiligen Anlage umgesetzt werden. Bevorzugt ist innerhalb der Isolatorkammer ein Reinraum bereitgestellt, besonders bevorzugt eine sterile Umgebung und ganz besonders bevorzugt eine aseptische Umgebung. Die Vorrichtung kann dabei beispielsweise als Aseptikvorrichtung ausgebildet sein und in der Isolatorkammer in auf an sich bekannte Weise eine definierte Reinraumatmosphäre bereitgestellt werden. Die Isolatorkammer kann aber auch für einen geringeren Hygienestandard ausgelegt sein.

Durch den Ablauf an der Unterseite der Isolatorkammer können Flüssigkeiten schwerkraftbedingt aus der Isolatorkammer abgeführt werden, ohne dass die Atmosphäre innerhalb der Isolatorkammer durch Keime von außerhalb der Isolatorkammer kontaminiert wird. Insbesondere bei einer Reinigung des Inneren der Isolatorkammer kann zur Reinigung verwendetes Reinigungsmedium durch den Ablauf ausgeführt werden.

Dadurch, dass an dem Ablauf eine Absaugvorrichtung zum Absaugen von Gasen aus der Isolatorkammer angebunden ist, können die Herstellkosten der Vorrichtung gegenüber herkömmlichen Vorrichtungen gesenkt werden, da für die Absaugvorrichtung keine eigene Anbindungseinheit mit der Isolatorkammer benötigt wird. Insbesondere kann während des Betriebs der Vorrichtung die Absaugvorrichtung über den Ablauf ein für die Behandlung der Behälter verwendetes gasförmiges Behandlungsmedium abgesaugt werden. Besonders vorteilhalft ist diese Anordnung bei der Verwendung von CO₂ als Behandlungsmedium. Aufgrund der Molekülmasse des CO₂ sammelt sich dieses am Boden der Isolatorkammer und kann somit über den am Boden der Isolatorkammer angeordneten Ablauf durch die mit dem Ablauf angebundene Absaugvorrichtung besonders effizient abgesaugt werden.

Ferner wird durch die gemeinsame Nutzung des Ablaufs zum Abführen von Flüssigkeiten und insbesondere Reinigungsmedien sowie Behandlungsgasen, wie insbesondere CO₂, ein effizienter und hygienisch vorteilhafter Aufbau der Vorrichtung erreicht, da auf zusätzliche Öffnungen zum Absaugen des Behandlungsgases, insbesondere CO₂, oder der Behandlungsgase verzichtet werden kann.

Bevorzugt ist der Boden der Isolatorkammer derart ausgeführt, dass Flüssigkeiten innerhalb der Isolatorkammer, insbesondere flüssige Reinigungsmedien, während der Reinigung der Vorrichtung schwerkraftbedingt in den Auslauf abgeführt werden können. Der Auslauf kann hierfür am tiefsten Punkt des Gehäusebodens angeordnet sein. Bevorzugt ist der Boden der Isolatorkammer dabei dem Auslauf trichterförmig zugewendet.

Erfindungsgemäß ist dem Ablauf eine Vorrichtung zum Aufbereiten von Reinigungsmedium nachgeordnet, bevorzugt eine CIP-Anlage. Dadurch kann für die Reinigung verwendetes Reinigungsmedium aufbereitet und hierdurch der Wasserverbrauch minimiert werden. Besonders vorteilhaft kann es sein, wenn der Ablauf und die Vorrichtung zum Aufbereiten von Reinigungsmedium für das Cleaning-In-Place Verfahren (CIP) geeignet sind. Hierdurch kann eine Reinigung innerhalb der Isolatorkammer angeordneter Komponenten ohne deren Demontage und unter Zirkulation des Reinigungsmediums und/oder Sterilisationsmediums durchgeführt werden. Erfindungsgemäß weist der Ablauf stromabwärts der Anbindung der Absaugvorrichtung ein Ablaufventil zum Verschließen des Ablaufs zwischen Reinigungsintervallen der Vorrichtung auf. So kann sichergestellt werden, dass während des Betriebs keine Keime in den sterilen Bereich des Ablaufs und der Isolatorkammer gelangen. Dadurch können besonders lange Behandlungszyklen erreicht werden, bevor eine erneute Reinigung und/oder Sterilisierung des Inneren der Isolatorkammer und der darin angeordneten mindestens einen Behandlungseinheit notwendig ist. Weiterhin kann durch das Schließen des Ablaufventils innerhalb der Isolatorkammer ein Reinigungsmediums-Pegel eingestellt werden, so dass das hierdurch aufgestaute Reinigungsmedium zumindest auf relevante Komponenten oder auf die komplette Behandlungseinheit einwirken kann. Vorteilhafterweise wird auf diese Weise auch die Absaugvorrichtung zumindest teilweise gereinigt, da diese zumindest teilweise unterhalb der Isolatorkammer beziehungsweise des Reinigungsmediums-Pegel angeordnet ist.

Bevorzugt ist zwischen der Absaugvorrichtung und dem Ablauf ein Ablaufventil zum Herstellen oder Blockieren der Kommunikation zwischen Ablauf und Absaugvorrichtung angeordnet. Durch Schließen des Ablaufventils kann die Absaugvorrichtung von dem Ablauf entkoppelt werden, so dass beispielsweise bei einer Reinigung der Vorrichtung kein Reinigungsmedium in die Absaugvorrichtung oder zumindest zu stromabwärts des Ablaufventils angeordneten Komponenten der Absaugvorrichtung gelangen kann.

Für ein gezieltes, schwerkraftbedingten Abführen von Flüssigkeiten, insbesondere von Behandlungsflüssigkeiten und Reinigungsmedien, kann eine Absaugleitung der Absaugvorrichtung ein Gefälle in Richtung auf die Anbindung an den Ablauf aufweisen.

In einer bevorzugten Weiterbildung ist ein Wasserabscheider zum Abscheiden von Feuchtigkeit an der Absaugvorrichtung, bevorzugt benachbart zu einer Anbindung einer Absaugleitung der Absaugvorrichtung, an dem Ablauf angeordnet. Hierdurch können etwaige in den durch die Absaugvorrichtung abgesaugten Gasen enthaltene Aerosole oder Flüssigkeitspartikel abgetrennt werden, so dass feuchtigkeitsempfindliche Komponenten der Absaugvorrichtung trocken bleiben. Weiterhin kann dadurch verhindert werden, dass sich in der Absaugvorrichtung stromabwärts des Wasserabscheiders aufgrund von Feuchtigkeit ein Biofilm bildet und die Atmosphäre der Isolatorkammer verunreinigt.

Für ein effizientes Absaugen von Gasen aus der Isolatorkammer kann die Absaugvorrichtung einen Absaugventilator aufweisen. Bevorzugt ist der Absaugventilator mit einem Ventil versehen, so dass bei Stillstand des Absaugventilators dessen Austrittsöffnung verschließbar ist.

In einer weiter bevorzugten Ausgestaltung weist der Ablauf eine Pumpe zum Abpumpen von Reinigungsmedium auf. Hierdurch kann die abzuleitende Flüssigkeit besonders effektiv abgeleitet werden und/oder dahinter befindlichen Komponenten zugeführt werden.

In einer bevorzugten Ausführungsform ist in der Isolatorkammer ein Verschließer mit Deckelbegasung zum Verschließen der Behälter angeordnet. Durch die Anordnung des Verschließers in der Isolatorkammer und dessen Ausführung in Isolatorbauweise kann die Drainage des Verschließers über den Ablauf der Isolatorkammer erfolgen. Weiterhin kann das zur Deckelbegasung verwendete Behandlungsgas, bevorzugt CO₂, über den Ablauf und die Absaugvorrichtung kontrolliert abgesaugt werden und gelangt nicht in die Außenumgebung der Vorrichtung. Bevorzugt ist in der Isolatorkammer weiterhin ein Füller angeordnet. So können die befüllten Behälter direkt an den Verschließer übergeben werden. Zudem ist für den Füller und den Verschließer lediglich ein Ablauf vorzusehen, über welchen zusätzlich das Behandlungsgas des Verschließers mittels der Absaugvorrichtung abgesaugt werden kann.

Die Isolatorkammer ist in einer bevorzugten Ausführungsform in mindestens zwei Behandlungsisolatorkammern beziehungsweise Isolatorkammer-Segmente unterteilt, wobei bevorzugt jede der Behandlungsisolatorkammern beziehungsweise Isolatorkammer-Segmente über eine Verbindungsleitung mit dem Ablauf verbunden ist. Bevorzugt ist in einer Behandlungsisolatorkammer dabei eine Behandlungseinrichtung angeordnet. Dadurch kann ein einzelner Behandlungsschritt beziehungsweise dessen Behandlungseinrichtung von einem weiteren Behandlungsschritt getrennt werden und somit die Sterilität in den einzelnen Behandlungsisolatorkammern und somit der gesamten Vorrichtung erhöht werden.

Die Absaugleitung kann dabei auch nur mit einer der Verbindungsleitungen in Kontakt stehen, um das Absaugen von Gasen nur aus einer der Kammern der Behandlungsisolatorkammern beziehungsweise Isolatorkammer-Segmente zu erreichen. Je nach Ausbildung der Vorrichtungen zum Behandeln der Behälter kann eine Absaugung der Gase nur in einer der Kammern notwendig sein. Beim Vorliegen einer Deckelbegasung in einem Verschließer kann es beispielsweise nur notwendig sein, nur die den Verschließer umfassende Kammer mit der Absaugung zu versehen, die anderen Kammern hingegen nicht.

In einer alternativen Ausführungsform können auch mindestens zwei separate Isolatorkammern bereitgestellt werden, die über einen Transportkanal miteinander verbunden sind. Durch eine derartige bauliche Gestaltung kann sichergestellt werden, dass eventuell überschüssiges CO₂ nicht aus der einen in die andere Isolatorkammer gelangen kann.

Vorzugsweise weist der Ablauf ein Gehäuse zum Aufnehmen ausgeschleuster Behälter auf. Das Gehäuse umfasst dabei zumindest eine an der Oberseite des Gehäuses angeordnete Eintrittsöffnung, die mit der Isolatorkammer kommuniziert, eine im unteren Bereich des Gehäuses angeordnete Ablauföffnung zum Ausleiten von Flüssigkeit, eine in dem Gehäuse zumindest zwischen Eintrittsöffnung und Ablauföffnung angeordnete Behälterführung und eine verschließbare Entnahmeöffnung.

Dadurch, dass der Ablauf ein Gehäuse zum Aufnehmen ausgeschleuster Behälter aufweist, wobei das Gehäuse zumindest eine an der Oberseite des Gehäuses angeordnete Eintrittsöffnung aufweist, die mit der Isolatorkammer kommuniziert, und eine im unteren Bereich des Gehäuses angeordnete Ablauföffnung zum Ausleiten von Flüssigkeit, eine in dem Gehäuse zumindest zwischen Eintrittsöffnung und Ablauföffnung angeordnete Behälterführung und eine verschließbare Entnahmeöffnung umfasst, können ausgeschleuste Behälter in dem Gehäuse gesammelt werden, so dass Öffnung der Anlage mit einer damit eingehergehenden Verunreinigung der Reinraumatmosphäre innerhalb der Isolatorkammer und/oder ein damit verbundenes Zusammenbrechen des Überdrucks in der Isolatorkammer vermieden wird. Dementsprechend kann die Betriebszeit der Vorrichtung zwischen zwei Reinigungszyklen verlängert werden, was in einer gegenüber dem Stand der Technik erhöhten Produktivität der Vorrichtung resultiert. Das Gehäuse kann somit als Sammelbehälter zum Sammeln ausgeschleuster Behälter dienen.

Bevorzugt ist der Boden der Isolatorkammer derart ausgeführt, dass Flüssigkeiten innerhalb der Isolatorkammer, insbesondere flüssige Reinigungsmedien, während der Reinigung der Vorrichtung schwerkraftbedingt in den Auslauf abgeführt werden können. Der Auslauf kann hierfür am tiefsten Punkt des Gehäusebodens angeordnet sein. Bevorzugt ist der Boden der Isolatorkammer dabei dem Auslauf trichterförmig zugewendet.

Ferner kann die Isolatorkammer somit selbst besonders klein ausgebildet sein, da darin kein Stauraum für ausgeleitete Behälter vorzusehen ist. So kann die Isolatorkammer konturnah an die mindestens eine sich in der Isolatorkammer befindende Behandlungseinheit ausgeführt sein.

Die Absaugvorrichtung kann hierbei sowohl stromabwärts der Ablauföffnung des Gehäuses in den Ablauf münden, als auch direkt in das Gehäuse münden.

Bei einer in mehrere Behandlungsisolatorkammern beziehungsweise Isolatorkammer-Segmente unterteilte Isolatorkammer, oder wenn mehrere Einzelisolatorkammern vorgesehen sind, kann der Ablauf auch mehr als ein Gehäuse aufweisen. Bevorzugt weist der Ablauf für eine Mehrzahl oder für jede der Behandlungsisolatorkammern ein Gehäuse auf.

In einer bevorzugten Ausführungsform ist das Gehäuse mit der Isolatorkammer integriert. Dadurch kann die Isolatorkammer besonders kompakt und einfach aufgebaut sein und ist ferner leicht zu reinigen.

Alternativ kann das Gehäuse auswechselbar ausgebildet sein, wobei das Gehäuse dabei bevorzugt über eine Schleuse mit der Isolatorkammer verbunden ist. So kann das Gehäuse, wenn es nahezu komplett mit Behältern befüllt ist, nach dem Schließen der Schleuse mit einem weiteren, unbefüllten Gehäuse ausgewechselt werden, ohne die Atmosphäre innerhalb der Isolatorkammer zu kontaminieren.

Besonders vorteilhaft kann es sein, wenn die Behälterführung als Gitterblech oder in Form einer Mehrzahl an Stäben ausgebildet ist. Hierdurch werden die ausgeleiteten Behälter sicher in Richtung der Entnahmeöffnung geführt. Weiterhin ist die Behälterführung gut zu reinigen, da in das Gehäuse eintretende Flüssigkeit aufgrund der offenen Bereiche der Behälterführung abgeführt werden kann. Auch abzusaugende Gase können so nahezu ungehindert abgesaugt werden.

In einer bevorzugten Ausführungsform weist die Behälterführung ein Gefälle in Richtung der Entnahmeöffnung auf. Dadurch können durch die Eintrittsöffnung fallende Behälter nach dem Auftreffen auf die Behälterführung schwerkraftbedingt selbstständig in Richtung Entnahmeöffnung geleitet werden.

Bevorzugt ist die Eintrittsöffnung an der Oberseite an einer ersten Seite des Gehäuses angeordnet und das Entnahmefenster an einer der ersten Seite entgegengesetzten Seite des Gehäuses angeordnet. Hierdurch kann ein großer Sammelbereich für ausgestoßene Behälter bereitgestellt werden. Weiterhin werden dadurch die Behälter von dem Bereich unterhalb der Eintrittsöffnung weggeleitet, so dass eine Verstopfung der Eintrittsöffnung bei noch nicht vollständig gefülltem Sammelbereich vermieden wird. Auch kann durch diese Anordnung eine Entnahme von Behältern auf der sog. Bedienerseite der Anlage erfolgen, während die eigentliche Ausschleusung von Behältern auf der gegenüberliegenden Seite erfolgen kann.

Eine besonders effektive Ableitung von Flüssigkeiten kann erreicht werden, wenn ein Boden des Gehäuses ein Gefälle in Richtung der Ablauföffnung aufweist. Abzuleitende Flüssigkeiten gleiten so schwerkraftbedingt automatisch zur Ablauföffnung.

Bevorzugt ist das Gefälle der Behälterführung und das Gefälle des Bodens entgegengesetzt ausgeführt, wobei die Entnahmeöffnung und die Ablauföffnung bevorzugt an entgegengesetzten Seiten des Gehäuses angeordnet sind.

In einer weiter bevorzugten Ausgestaltung weist die Eintrittsöffnung einen Zulaufverschluss zum zumindest zeitweiligen Unterbrechen der Kommunikation mit der Isolatorkammer auf. Hierdurch kann, beispielsweise weil das Gehäuse komplett mit ausgeschleusten Behältern befüllt ist, das Innere der Isolatorkammer von dem Inneren des Gehäuses getrennt werden, so dass die Atmosphäre innerhalb der Isolatorkammer bei einem Öffnen der Entnahmeöffnung nicht beinträchtig wird, insbesondere da ein Gasaustausch zwischen der Umgebung und dem Innenraum der Isolatorkammer dadurch vermieden werden kann. Hierdurch können auch keinerlei Keime oder andere Verunreinigungen in die Isolatorkammer gelangen, so dass auch bei einem Öffnen des Gehäuses eine Verletzung des Sterilraums in der Isolatorkammer vermieden werden kann.

Alternativ kann der Zulaufverschluss den Querschnitt der Eintrittsöffnung nur teilweise verschließen und somit lediglich verringern, so dass bei einem Öffnen der Entnahmeöffnung ein im Vergleich zur komplett offenen Eintrittsöffnung reduzierter Gasstrom aufgrund des Überdrucks in der Isolatorkammer im Vergleich zur Umgebung der Vorrichtung durch die Eintrittsöffnung gelangt. Dadurch kann der Überdruck der Isolatorkammer und somit die bevorzugt sterile Reinraumatmosphäre innerhalb der Isolatorkammer länger aufrechterhalten werden. Gleichzeitig besteht durch die in der Eintrittsöffnung verbleibende Öffnung ein stetiger Luftstrom aus der überdruckbehafteten Isolatorkammer in Richtung der Entnahmeöffnung, so dass keine Luft aus der Umgebung in das Gehäuse gelangen kann. Demgemäß kann auch bei beziehungsweise nach einer Entnahme der ausgeschleusten Behälter die Sterilität der Atmosphäre innerhalb der Isolatorkammer zumindest großteils aufrechterhalten werden. So muss auch nach einer Entnahme der ausgeleiteten Behälter der Betrieb der Vorrichtung nicht für eine Reinigung unterbrochen werden oder zumindest muss nach der Öffnung keine erneute Sterilisation der Anlage vorgenommen werden.

Durch das Vorsehen der Absaugvorrichtung an dem Ablauf können die Herstellkosten der Vorrichtung gegenüber herkömmlichen Vorrichtungen gesenkt werden, da für die Absaugvorrichtung keine eigene Anbindungseinheit mit der Isolatorkammer benötigt wird. Insbesondere kann während des Betriebs der Vorrichtung die Absaugvorrichtung über den Ablauf ein für die Behandlung der Behälter verwendetes gasförmiges Behandlungsmedium abgesaugt werden. Besonders vorteilhaft ist diese Anordnung bei der Verwendung von CO₂ als Behandlungsmedium. Da das CO₂ eine größere Molekülmasse im Vergleich zu beispielsweise Sauerstoff und Stickstoff aufweist, sammelt sich dieses am Boden der Isolatorkammer ab und kann somit über den an der Unterseite der Isolatorkammer angeordneten Ablauf durch die mit dem Ablauf in Kommunikation stehende Absaugvorrichtung ohne Kontamination des Inneren der Isolatorkammer besonders effizient abgesaugt werden.

Durch das Vorsehen des Gehäuses können ausgeschleuste Behälter in dem Gehäuse gesammelt werden, so dass eine einzelne Ausleitung mit einer damit eingehergehenden Verunreinigung der Reinraumatmosphäre innerhalb der Isolatorkammer und/oder ein damit verbundenes Zusammenbrechen des Überdrucks in der Isolatorkammer vermieden wird. Dementsprechend kann die Betriebszeit der Vorrichtung zwischen zwei Reinigungszyklen verlängert werden, was in einer gegenüber dem Stand der Technik erhöhten Produktivität der Vorrichtung resultiert. Das Gehäuse kann somit als Sammelbehälter zum Sammeln ausgeschleuster Behälter dienen.

Weiterhin ist für das Absaugen gasförmiger Behandlungsmedien und für das Ableiten von Flüssigkeiten, beispielsweise Sterilisationsfluid, Reinigungsmedium und/oder Füllflüssigkeit, mit welcher die Behälter zu befüllen sind, nur eine Öffnung an der Isolatorkammer notwendig. Hierdurch kann die Vorrichtung einfach aufgebaut werden und ist leicht zu reinigen.

Ferner kann dadurch auch nach einem Öffnen der Behälterentnahme das Gehäuse ein sogenannter Grauraum sein, da sich aufgrund der Absaugung ein stetiger Gasstrom beziehungsweise Luftstrom aus der Isolatorkammer durch das Gehäuse in die Ablauföffnung und zur Absaugvorrichtung einstellt und so keine Keime in das Innere der Isolatorkammer gelangen können. Dementsprechend kann ein Betriebszyklus der Vorrichtung nochmals verlängert werden, was zu einer nochmaligen Erhöhung der Produktivität der Vorrichtung führt.

In einer bevorzugten Ausführungsform sind innerhalb der Isolatorkammer ein Füller zum Befüllen der Behälter und ein Verschließer mit Deckelbegasung zum Verschießen der befüllten Behälter angeordnet. Dadurch können zum einen die fehlerhaft befüllten und ausgeschleusten Behälter in dem Gehäuse gesammelt werden. Zum anderen kann das zur Deckelbegasung verwendete Behandlungsgas, bevorzugt CO₂, durch die Absaugvorrichtung abgesaugt werden. Dies resultiert in einem besonders einfachen Aufbau der Vorrichtung, da lediglich ein Ablauf und eine Absaugung vorzusehen ist. Weiterhin kann verhindert werden, dass die Umgebung, in welcher sich die Vorrichtung befindet, beispielsweise eine Industriehalle, mit dem Behandlungsgas kontaminiert wird beziehungsweise, dass sich Behandlungsgas in der Umgebung um die Vorrichtung ansammelt und zu einer Überschreitung der maximalen Arbeitsplatzkonzentration führt.

Ein besonders einfacher und kostengünstiger Aufbau kann erreicht werden, wenn der Füller und der Verschließer gemeinsam in der Isolatorkammer angeordnet sind.

In einer alternativen Ausführungsform ist die Isolatorkammer in eine Füllerkammer zum Einhausen des Füllers und eine Verschließerkammer zum Einhausen des Verschließers unterteilt. Bevorzugt weisen Verschließerkammer und Füllerkammer dabei jeweils eine separate Absaugleitung an den Ablauf auf. Hierdurch sind die Atmosphäre in der Füllerkammer und die Atmosphäre in der Verschließerkammer nahezu beziehungsweise gänzlich unabhängig voneinander.

Alternativ kann die Verschließerkammer auch mit der Füllerkammer verbunden sein, so dass nur ein Anschluss vorgesehen werden muss.

In einer bevorzugten Ausführungsform ist eine Preformblasvorrichtung zum Streckblasen von Kunststoff-Preforms behälterpfadaufwärts des Füllers vorgesehen. Der Boden der Isolatorkammer ist dabei bevorzugt derart ausgebildet, dass fehlerhafte und fehlerhaft behandelte Preforms - vor und nach dem Streckblasen - ebenfalls durch die Eintrittsöffnung in das Gehäuse gelangen können. Dadurch können die obengenannten Vorteile auch auf den Bereich der Preformblasvorrichtung ausgeweitet werden.

Stromabwärts einer erfindungsgemäßen Vorrichtung bestehend aus Preformblasvorrichtung und/oder Füller und/oder Verschließer kann eine Vorrichtung zum Ausstatten der Behältnisse z. B. durch Etiketten oder Druckeinrichtungen angeordnet sein. Bevorzugt werden die Behälter nach dem Verschließen durch eine Vorrichtung getrocknet bevor sie zu der Vorrichtung zum Ausstatten gelangen. Die Vorrichtung zum Ausstatten kann mit der erfindungsgemäßen Vorrichtung in einem Block verbaut oder in aneinander angrenzenden Blöcken vorgesehen sein.

In einer weiter bevorzugten Ausführungsform ist mehr als ein Gehäuse vorgesehen, wobei der Ablauf mit der Ablauföffnung von mehr als einem, bevorzugt jedem, Gehäuse verbunden ist. Dadurch kann bei einer Mehrzahl an Behandlungseinheiten innerhalb der Isolatorkammer eine den Behandlungseinheiten größenangepasstes Gehäuse mit einem demgemäß angepassten Aufnahmevermögen bereitgestellt werden. Besonders bevorzugt kann dabei für den Füller, den Verschließer, sowie die Preformblasvorrichtung jeweils ein eigenes Gehäuse zum Aufnehmen ausgeleiteter Behälter vorgesehen sein. Alternativ kann auch nur für einzelne Behandlungseinheiten ein separates Gehäuse vorgesehen sein, wobei sich die übrigen Behandlungseinheiten ein weiteres Gehäuse teilen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Seitenansicht einer Vorrichtung zum Befüllen und Verschließen von Behältern mit einem eine Absaugvorrichtung aufweisenden Ablauf;
- Figur 2: schematisch eine Seitenansicht einer Vorrichtung zum Befüllen und Verschließen von Behältern mit einem Auslauf, welche eine Absaugvorrichtung und zwei Gehäuse zum Aufnehmen ausgeschleuster Behälter aufweist;
- Figur 3: schematisch eine perspektivische Seitenansicht eines Gehäuses zum Aufnehmen ausgeschleuster Behälter gemäß Figur 2; und
- Figur 4: schematisch eine perspektivische, teilgeschnittene Schnittansicht durch das Gehäuse aus Figur 3.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

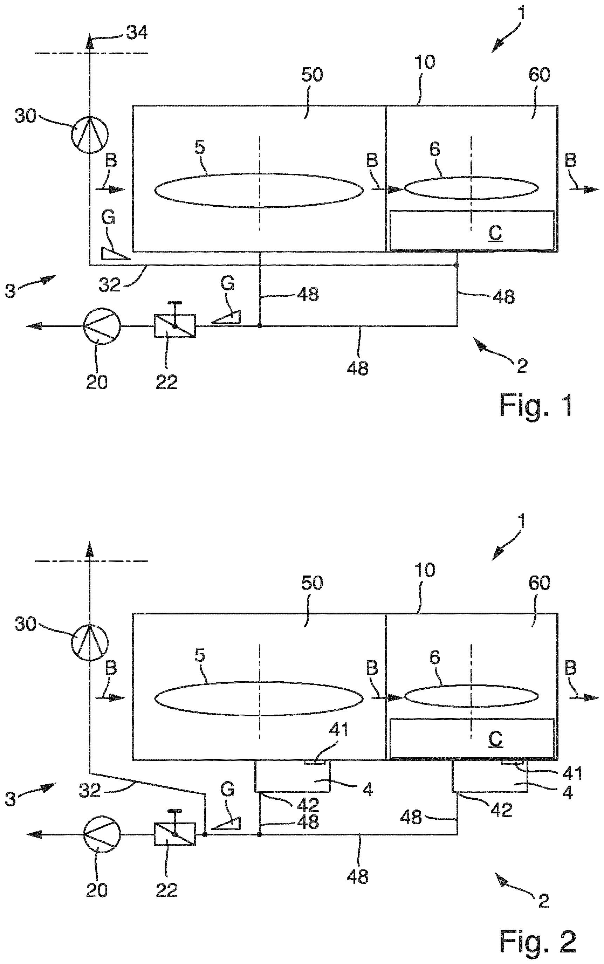

In Figur 1 ist schematisch eine Seitenansicht einer Vorrichtung 1 zum Befüllen und Verschließen von Behältern mit einem eine Absaugvorrichtung 3 aufweisenden Ablauf 2 gezeigt. Im vorliegenden Fall werden in der Vorrichtung 1 beispielsweise Dosen befüllt und verschlossen. Die Vorrichtung 1 weist eine Isolatorkammer 10 auf, welche einen gegenüber der Umgebung abgeschlossenen Raum bereitstellt.

Die Vorrichtung 1 kann beispielsweise als Aseptikvorrichtung ausgebildet sein und in der Isolatorkammer 10 in auf an sich bekannte Weise eine definierte Reinraumatmosphäre bereitgestellt werden. Die Isolatorkammer 10 kann aber auch für einen geringeren Hygienestandard ausgelegt sein.

Die Isolatorkammer 10 ist in dieser Ausführungsform in eine Füllerkammer 50 und eine Verschließerkammer 60 unterteilt, welche über eine Zwischenschleuse verbunden sind. In einer alternativen Ausführungsform können auch zwei separate Isolatorkammern bereitgestellt werden, die über einen Transportkanal miteinander verbunden sind.

In der Füllerkammer 50 ist ein Füller 5 zum Füllen von Behältern angeordnet. In der Verschließerkammer 60 ist ein Verschließer 6 mit Deckelbegasung zum Verschließen der im Füller 5 befüllten Behälter vorgesehen. Als Behandlungsgas zur Deckelbegasung wird CO₂ verwendet. Es können aber auch andere Behandlungsgase eingesetzt werden, beispielsweise Stickstoff.

Entsprechend wird nicht nur der Füller 5, sondern auch der Verschließer 6 in einer Isolatorkammer 10 aufgenommen.

Unterhalb der Isolatorkammer 10 ist ein Ablauf 2 angeordnet. Der Ablauf 2 weist jeweils eine Verbindungsleitung 48 auf, die im Bodenbereich der Füllerkammer 50 und der Verschließerkammer 60 einmünden und entsprechend mit dem Innenraum der Isolatorkammern 10 in Kommunikation stehen. Damit können Flüssigkeiten, welche auf den Boden der Isolatorkammer 10 auftreffen, durch den Ablauf 2 und die Verbindungsleitung 48 schwerkraftbedingt abgeleitet werden. Der Boden der jeweiligen Isolatorkammer 10 ist dabei bevorzugt so ausgebildet, dass die einzelnen Bodenbereiche dem Ablauf und insbesondere der Einmündung der Verbindungsleitung 48 trichterförmig zugewendet sind, damit sämtliche Flüssigkeiten in den Ablauf 2 fließen.

Der Ablauf 2 steht ferner mit einer Absaugvorrichtung 3 zum Absaugen von Gasen aus der Isolatorkammer 10 in Kommunikation. Die Verbindungsleitungen 48 sind dabei mit einer Absaugleitung 32 verbunden. Die Gase werden über einen Absaugventilator 30 in die Absaugvorrichtung 3 gesaugt und über eine Ablufteinrichtung 34 in eine Außenatmosphäre außerhalb einer Halle, in welcher die Vorrichtung 1 aufgestellt ist, abgegeben. Die Absaugleitung 32 kann auch nur mit einer der Verbindungsleitungen 48 in Kontakt stehen, um das Absaugen von Gasen nur aus einer der Kammern der Isolatorkammer 10 zu erreichen. Je nach Ausbildung der Vorrichtungen zum Behandeln der Behälter kann eine Absaugung der Gase nur in einer der Kammern notwendig sein. Beim Vorliegen einer Deckelbegasung in einem Verschließer kann es beispielsweise nur notwendig sein, nur die den Verschließer umfassende Kammer mit der Absaugung zu versehen, die anderen Kammern hingegen nicht.

Die Leitungen des Ablaufs 2 und die Leitungen der Absaugvorrichtung 3 sind jeweils mit einem Gefälle G ausgeführt, so dass Flüssigkeiten, die in die jeweiligen Leitungen gelangen, schwerkraftbedingt von selbst abgeleitet werden und nicht in den Leitungen stehen bleiben. Das Gefälle G ist in Figur 1 durch mit G bezeichnete, rechtwinklige Dreiecke angedeutet. Die Richtung des Gefälles G ist dabei durch die Lage der Hypotenuse der Dreiecke angedeutet.

Dem Ablauf 2 ist eine Vorrichtung zum Aufbereiten von Reinigungsmedium nachgeordnet und das über den Ablauf abgezogene Reinigungsmedium wird mittels einer Pumpe 20 zu der Vorrichtung transportiert. In dieser wird zur Reinigung der Vorrichtung 1 verwendetes und durch den Ablauf 2 abgeführtes Reinigungsmedium aufbereitet, wodurch bei der Reinigung der Vorrichtung 1 ein geschlossener Kreislauf des Reinigungsmediums vorliegt, durch welchen Wasser und Reinigungsmedium eingespart werden kann. Eine solche Reinigungsvorrichtung ist an sich bekannt.

Um den Ablauf 2 zwischen den Reinigungsintervallen verschließen zu können und somit eine Kontamination der Atmosphäre innerhalb der Isolatorkammer 10 durch aus dem Ablauf 2 stammende Keime zu verhindern, kann der Ablauf 2 mit einem Ablaufventil 22 verschlossen werden.

Das Ablaufventil 22 kann ferner dazu verwendet werden, bei einer Reinigung der Vorrichtung 1 ein Ablaufen von in die Vorrichtung 1 eingebrachtem Reinigungsmedium zu verhindern, so dass sich das Reinigungsmedium bis zu einem vorgegebenen Pegel in der Isolatorkammer 1 aufstaut. Auf diese Weise kann das Reinigungsmedium auch in die Absaugleitung 32 oberhalb der Anbindungspunkte zu den Verbindungsleitungen 48 gelangen und die Absaugvorrichtung 3 somit zumindest teilweise und/oder soweit erforderlich mit dem Reinigungsmedium geflutet werden, um eine Reinigung zu erreichen. Weiterhin kann eine vorgegebene Einwirkzeit auf sich unterhalb des Staupegels des Reinigungsmediums befindende Komponenten der Vorrichtung erzielt werden. Nach Öffnen des Ablaufventils 22 kann das gestaute Reinigungsmedium dann wieder abgeführt und/oder aufbereitet werden.

Während des Betriebs der Vorrichtung 1 werden die zu befüllenden Behälter entlang des Behälterpfads B durch die Vorrichtung befördert. Dabei treten die zu befüllenden Behälter durch eine Eintrittsschleuse in die Füllerkammer 50 ein, werden darin mit einem Füllgut befüllt und durch die Zwischenschleuse in die Verschließerkammer 60 und an den Verschließer 6 weitergegeben. Der Verschließer 6 verschließt die befüllten Behälter, wobei zum Ausspülen der Deckel der Behälter eine Deckelbegasung mit CO₂ stattfindet. Nach dem Verschließen werden die geschlossenen Behälter durch eine Austrittsschleuse der Isolatorkammer 10 entlang des Behälterpfads B aus der Vorrichtung ausgeschleust.

Aufgrund der molekularen Masse von CO₂ sammelt sich das CO₂ während des Betriebs des Verschließers 6 schwerkraftbedingt am Boden der Verschließerkammer 60 an und bildet dort einen CO₂-See C aus. Da der Ablauf 2 während des Abfüllbetriebs der Vorrichtung 1 nicht mit Reinigungsmedium beaufschlagt wird, kann die Absaugvorrichtung 3 über den Ablauf 2 das sich im Bodenbereich im Verschließer ansammelnde CO₂ absaugen. Da der Ablauf 2 unterhalb der Isolatorkammer 10 angeordnet ist und die Absaugvorrichtung als Teil des Ablaufs 2 ausgebildet ist, wird ein besonders effektives Ableiten der CO₂-Moleküle erreicht.

Weiterhin wird durch die gemeinsame Nutzung des Ablaufs 2 zum Abführen von Flüssigkeiten und insbesondere Reinigungsmedien sowie von CO₂ ein effizienter und hygienisch vorteilhafter Aufbau der Vorrichtung 1 erreicht, da auf zusätzliche Öffnungen zum Absaugen des CO₂ verzichtet werden kann.

In Figur 2 ist schematisch eine Seitenansicht einer weiteren Vorrichtung 1 zum Befüllen und Verschließen von Behältern gezeigt.

Der Aufbau und der Betriebsablauf sowie der Reinigungsablauf der Vorrichtung 1 entsprechen jenen der Vorrichtung aus Figur 1. So weist auch die Vorrichtung 1 aus Figur 2 eine in eine Füllerkammer 50 und eine Verschließerkammer 60 unterteilte Isolatorkammer 10 auf. In der Füllerkammer 50 ist ein Füller 5 zum Befüllen von Behältern und in der Verschließerkammer 60 ein Verschließer 6 mit Deckelbegasung zum anschließenden Verschließen der befüllten Behälter angeordnet. Unterhalb der Isolatorkammer 10 ist wiederum ein Ablauf 2 zum Ableiten von Flüssigkeiten angeordnet, an welchem wiederum eine Absaugvorrichtung 3 entsprechend jener aus Figur 1, sowie ein Ablaufventil 22 und eine Pumpe 20 zum Zuführen des abgezogenen Reinigungsmediums zu einer Vorrichtung zum Aufbereiten des Reinigungsmediums angeordnet sind.

Der Ablauf 2 umfasst in diesem Ausführungsbeispiel aber zwei Gehäuse 4 zum Aufnehmen ausgeschleuster Behälter.

Im Unterschied zur Vorrichtung 1 aus Figur 1 münden die Füllerkammer 50 und die Verschließerkammer 60 der Vorrichtung 1 aus Figur 2 entsprechend an ihren Unterseiten jeweils in ein Gehäuse 4 zum Aufnehmen ausgeschleuster Behälter, welches wiederum jeweils über eine Ablauföffnung 42 in eine Verbindungsleitung 48 des Auslauf 2 mündet. Zur Kommunikation mit der Isolatorkammer 10 weisen die Gehäuse 4 jeweils eine Eintrittsöffnung 41 auf. Die Gehäuse 4 sind dabei mit der Isolatorkammer 10 gasdicht verbunden. Die Gehäuse 4 bilden dementsprechend einen Teil des Ablaufs 2 aus.

Im Betrieb der Vorrichtung 1 werden im Füller 5 fehlerhaft befüllte Behälter durch eine an dem Füller vorgesehene Ausstoßvorrichtung in das Gehäuse 4 unterhalb der Füllerkammer 50 gestoßen. Die ausgestoßenen Behälter gelangen dabei durch die Eintrittsöffnung 41 in das Gehäuse 4 und werden darin gesammelt. Das Gehäuse 4 hat damit auch die Aufgabe eines Sammelbehältnisses für ausgestoßene Behälter.

Gleichermaßen werden fehlerbehaftete Behälter, beispielsweise fehlerhaft geschlossene Behälter, aus dem Verschließer 6 mittels einer am Verschließer angeordneten weiteren Ausstoßvorrichtung in das Gehäuse 4 unterhalb der Verschließerkammer 60 ausgestoßen. Die ausgestoßenen Behälter gelangen entsprechend durch die Eintrittsöffnung 41 in das Gehäuse 4 und werden darin gesammelt.

Bevorzugt sind die Gehäuse 4 zum Sammeln einer Vielzahl von Behältern ausgelegt. Weiterhin können die Größen der Gehäuse 4 angepasst werden, so dass beispielsweise das Gehäuse 4 unterhalb des Füllers 5 größer ausgebildet ist und somit ein größeres Fassungsvermögen für Behälter aufweist, als das Gehäuse 6 unterhalb des Verschließers 6, wenn während des Betriebs der Vorrichtung 1 im allgemeinen in einem Betriebszyklus beim Befüllen mehr Behälter ausgestoßen werden, als beim Verschließen der befüllten Behälter.

Da die Gehäuse 4 über den Auslauf 2 mit der Absaugvorrichtung 3 verbunden sind, können in der Isolatorkammer 20 befindliche Gase, insbesondere das sich in der Verschließerkammer 60 als CO₂-See C ansammelnde Behandlungsgas CO₂, während des Betriebs der Vorrichtung 1 abgesaugt und in die Außenatmosphäre ausgeleitet werden. Dies war oben zu Figur 1 schon beschrieben worden.

In der Figur 2 sind zwei Gehäuse 4 gezeigt. In einer Vorrichtung 1, in welcher nur eine Ausstoßvorrichtung zum Ausstoßen fehlerhafter Behälter vorgesehen ist, kann natürlich auch nur ein einziges Gehäuse 4 vorgesehen sein - beispielsweise unterhalb des Verschließers 6.

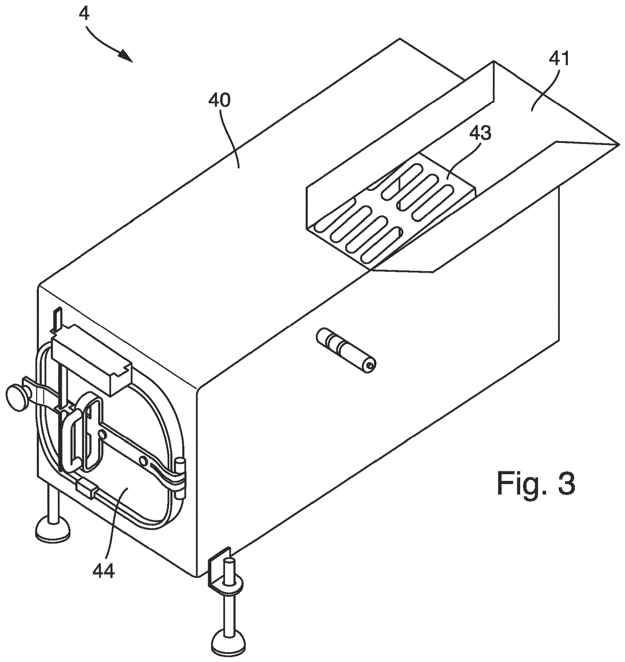

In Figur 3 ist schematisch eine perspektivische Seitenansicht eines Gehäuses 4 zum Aufnehmen ausgeschleuster Behälter gemäß Figur 2 gezeigt. An der Oberseite 40 des Gehäuses 4 ist die Eintrittsöffnung 41 angeordnet, mittels welcher das Gehäuse 4 mit der Isolatorkammer kommuniziert. Durch die Eintrittsöffnung 40 gelangen aus der jeweiligen Isolatorkammer abgeleitete Flüssigkeiten, abgesaugte Gase, sowie ausgeleitete Behälter in das Innere des Gehäuses 4. Darin ist eine Behälterführung 43 in Form eines Lochblechs angeordnet. Der Behälterführung 43 kommt dabei die Aufgabe zu, ausgeleitete Behälter in Richtung einer Entnahmeöffnung 44 zu führen. Die Entnahmeöffnung 44 ist hier in einem luftdicht verschlossenen Zustand gezeigt. Für eine Entnahme in dem Gehäuse 4 angesammelter Behälter kann die Entnahmeöffnung 44 temporär geöffnet werden.

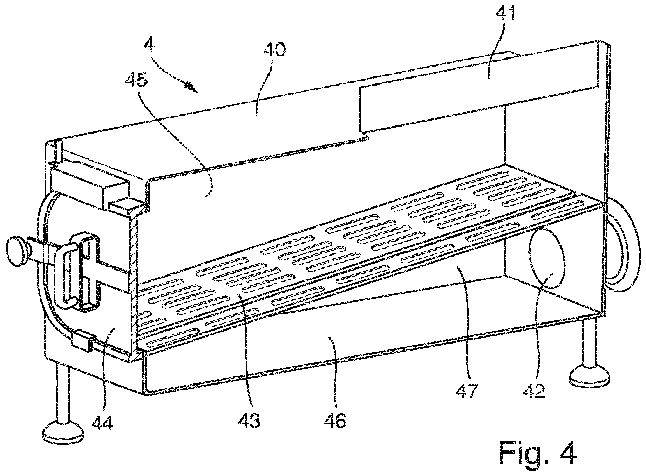

Figur 4 zeigt schematisch eine perspektivische, teilgeschnittene Ansicht durch das Gehäuse 4 aus Figur 3. Die Behälterführung 43 unterteilt das Innere des Gehäuses 4 in einen Sammelbereich 45 und in einen unteren Bereich 47. Im Sammelbereich 45 werden die durch die Eintrittsöffnung 41 eingetretenen Behälter gesammelt. Im unteren Bereich 47 ist die Ablauföffnung 42 angeordnet ist, welche in die Verbindungsleitung 48 des Ablaufs 2 mündet. Die Behälterführung 43 weist ein Gefälle von der Eintrittsöffnung 41 in Richtung der Entnahmeöffnung 44 auf. Dadurch werden durch die Eintrittsöffnung 41 fallende Behälter nach dem Auftreffen auf die Behälterführung 43 schwerkraftbedingt selbstständig in Richtung Entnahmeöffnung 44 geleitet. Da die Eintrittsöffnung 41 an der Oberseite 40 an einer ersten Seite des Gehäuses 4 angeordnet ist und das Entnahmefenster 44 an einer der ersten Seite entgegengesetzten Seite des Gehäuses 4 angeordnet ist, kann ein großer Sammelbereich der Behälter bereitgestellt werden. Weiterhin werden die Behälter von dem Bereich unterhalb der Eintrittsöffnung 41 weggeleitet, so dass eine Verstopfung der Eintrittsöffnung 41 bei noch nicht vollständig gefülltem Sammelbereich 45 vermieden wird.

Durch die Eintrittsöffnung 41 eintretende Flüssigkeiten können durch die Löcher der Behälterführung 43 in den unteren Bereich 47 gelangen. Dort treffen sie schwerkraftbedingt auf den Boden 46 des Gehäuses 4. Der Boden 46 weist ein Gefälle in Richtung der Ablauföffnung 42 auf, so dass auf den Boden 46 auftreffende Flüssigkeiten schwerkraftbedingt in die Ablauföffnung 42 geführt werden. Vorteilhafterweise ist dabei das Gefälle der Behälterführung 43 und das Gefälle des Behälterbodens 46 entgegengesetzt zueinander ausgebildet. Dadurch kann eine effektive Trennung von Flüssigkeiten und Behältern erzielt werden.

Weiterhin können durch die Eintrittsöffnung 41 in das Gehäuse 4 eingetretene Gase durch die Löcher der Behälterführung 43 gelangen und durch die Ablauföffnung 42 abgesaugt werden.

Die Eintrittsöffnung 41 kann ferner mit einem Zulaufverschluss verschließbar sein, bevorzugt in Form eines Lamellenlüftungsgitters (nicht gezeigt). Durch den Zulaufverschluss kann während des Öffnens des Gehäuses 4 über die Entnahmeöffnung 44 der Innenraum des Gehäuses 4 gegenüber der Isolatorkammer 10 ganz oder teilweise verschlossen werden, so dass ein Gasaustausch zwischen der Umgebung und dem Innenraum der Isolatorkammer 10 vermieden werden kann. Damit ist möglich, das Gehäuse 4 zu öffnen, ohne beispielsweise den Sterilraum in der Isolatorkammer 10 zu verletzen.

Alternativ können die Gehäuse 4 auch über eine Schleuse mit der Isolatorkammer 10 der Vorrichtung aus Figur 2 verbunden sein, so dass ein Gehäuse 4, welches nahezu komplett mit Behältern befüllt ist, durch Schließen der Schleuse mit einem weiteren Gehäuses mit leerem Sammelbereich ausgewechselt werden kann, ohne die Atmosphäre innerhalb der Isolatorkammer 10 zu kontaminieren.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuaszeichenliste

- 1: Vorrichtung
- 10: Isolatorkammer
- 2: Ablauf
- 20: Pumpe
- 22: Ablaufventil
- 3: Absaugvorrichtung
- 30: Absaugventilator
- 32: Absaugleitung
- 34: Ablufteinrichtung
- 4: Gehäuse
- 40: Oberseite
- 41: Eintrittsöffnung
- 42: Ablauföffnung
- 43: Behälterführung
- 44: Entnahmeöffnung
- 45: Sammelbereich
- 46: Boden
- 47: unterer Bereich
- 48: Verbindungsleitung
- 5: Füller
- 50: Füllerkammer
- 6: Verschließer
- 60: Verschließerkammer

- B: Behälterpfad
- C: CO₂-See
- G: Gefälle

## Patentansprüche

1. Vorrichtung (1) zum Behandeln von Behältern, umfassend eine Isolatorkammer (10), in der die Behandlung der Behälter erfolgt, und einen am Boden der Isolatorkammer (10) angebundenen Ablauf (2) zum Ableiten von Flüssigkeiten, wobei an den Ablauf (2) eine Absaugvorrichtung (3) zum Absaugen von Gasen aus der Isolatorkammer (10) angebunden ist, wobei dem Ablauf (2) eine Vorrichtung zum Aufbereiten von Reinigungsmedium nachgeordnet ist, **dadurch gekennzeichnet, dass** der Ablauf (2) stromabwärts der Anbindung der Absaugvorrichtung (3) ein Ablaufventil (22) zum Verschließen des Ablaufs (2) zwischen Reinigungsintervallen der Vorrichtung (1) aufweist.

2. Vorrichtung (1) gemäß Anspruch 1, **dadurch gekennzeichnet, dass** die Vorrichtung zum Aufbereiten von Reinigungsmedium eine CIP-Anlage ist.

3. Vorrichtung (1) gemäß Anspruch 1 oder 2, **dadurch gekennzeichnet, dass** zwischen der Absaugvorrichtung (3) und dem Ablauf (2) ein Ablaufventil (22) zum Herstellen oder Blockieren der Kommunikation zwischen Ablauf (2) und Absaugvorrichtung (3) angeordnet ist.

4. Vorrichtung (1) gemäß einem der vorstehenden Ansprüche, **dadurch gekennzeichnet, dass** eine Absaugleitung (32) der Absaugvorrichtung (3) ein Gefälle (G) in Richtung auf die Anbindung an den Ablauf (2) aufweist und/oder ein Wasserabscheider zum Abscheiden von Feuchtigkeit an der Absaugvorrichtung (3), bevorzugt benachbart zu einer Anbindung einer Absaugleitung (32) der Absaugvorrichtung (3) an den Ablauf (2) angeordnet ist.

5. Vorrichtung (1) nach einem der vorstehenden Ansprüche, **dadurch gekennzeichnet, dass** die Absaugvorrichtung (3) einen Absaugventilator (30) aufweist und/oder der Ablauf (2) eine Pumpe (20) zum Abpumpen von Reinigungsmedium aufweist.

6. Vorrichtung (1) gemäß einem der vorstehenden Ansprüche, **dadurch gekennzeichnet, dass** in der Isolatorkammer (10) ein Verschließer (6) mit Deckelbegasung zum Verschließen der Behälter angeordnet ist und/oder dass in der Isolatorkammer (10) ein Füller (5) angeordnet ist.

7. Vorrichtung (1) gemäß einem der vorstehenden Ansprüche, **dadurch gekennzeichnet, dass** der Ablauf (2) ein Gehäuse (4) zum Aufnehmen ausgeschleuster Behälter aufweist, wobei das Gehäuse (4)
eine an der Oberseite (40) des Gehäuses (4) angeordnete Eintrittsöffnung (41), die mit der Isolatorkammer (10) kommuniziert,
eine im unteren Bereich des Gehäuses (4) angeordnete Ablauföffnung (42) zum Ausleiten von Flüssigkeit,
eine in dem Gehäuse (4) zumindest zwischen Eintrittsöffnung (41) und Ablauföffnung (42) angeordnete Behälterführung (43), und
eine verschließbare Entnahmeöffnung (44) umfasst.

8. Vorrichtung (1) gemäße Anspruch 7, **dadurch gekennzeichnet, dass** das Gehäuse (4) mit der Isolatorkammer (10) integriert ist.

9. Vorrichtung (1) gemäß Anspruch 7 oder 8, **dadurch gekennzeichnet, dass** die Behälterführung (43) als Gitterblech oder in Form einer Mehrzahl an Stäben ausgebildet ist.

10. Vorrichtung (1) gemäß einem der Ansprüche 7 bis 9, **dadurch gekennzeichnet, dass** die Behälterführung (43) ein Gefälle (G) in Richtung der Entnahmeöffnung (44) aufweist und/oder ein Boden (46) des Gehäuses (4) ein Gefälle (G) in Richtung der Ablauföffnung (42) aufweist.

11. Vorrichtung (1) gemäß einem der Ansprüche 7 bis 10, **dadurch gekennzeichnet, dass** die Eintrittsöffnung (41) einen Zulaufverschluss zum zumindest zeitweiligen Unterbrechen der Kommunikation mit der Isolatorkammer (10) aufweist.

12. Vorrichtung (1) gemäß Anspruch 6, **dadurch gekennzeichnet, dass** der Füller (5) und der Verschließer (6) gemeinsam in der Isolatorkammer (10) angeordnet sind.

13. Vorrichtung (1) gemäß Anspruch 6, **dadurch gekennzeichnet, dass** die Isolatorkammer (10) in eine Füllerkammer (50) zum Einhausen des Füllers (5) und eine Verschließerkammer (60) zum Einhausen des Verschließers (6) unterteilt ist.

14. Vorrichtung (1) gemäß einem der vorstehenden Ansprüche, **dadurch gekennzeichnet, dass** eine Preformblasvorrichtung zum Streckblasen von Kunststoff-Preforms behälterpfadaufwärts des Füllers (5) vorgesehen ist.

15. Vorrichtung (1) gemäß einem der vorstehenden Ansprüche, **dadurch gekennzeichnet, dass** mehr als ein Gehäuse (4) vorgesehen ist, wobei der Ablauf (2) mit der Ablauföffnung (41) von mehr als einem, bevorzugt jedem, Gehäuse (4) verbunden ist.

## Claims

1. Device (1) for treating containers, comprising an isolator chamber (10), in which the treatment of the containers takes place, and an outlet (2) for discharging fluids which is connected to the floor of the isolator chamber (10), wherein
a suction device (3) for suctioning gases out of the isolator chamber (10) is connected to the outlet (2),
wherein a device for processing cleaning medium is arranged downstream of the outlet (2), **characterised in that** the outlet (2) downstream of the connection of the suction device (3) has an outlet valve (22) for closing the outlet (2) between cleaning intervals of the device (1).

2. Device (1) according to claim 1, **characterised in that** the device for processing cleaning medium is a CIP system.

3. Device (1) according to claim 1 or 2, **characterised in that** an outlet valve (22) for establishing or blocking communication between outlet (2) and suction device (3) is arranged between the suction device (3) and the outlet (2).

4. Device (1) according to any of the preceding claims, **characterised in that** a suction line (32) of the suction device (3) has a downwards slope (G) in the direction of the connection to the outlet (2) and/or a water separator for separating moisture is arranged on the suction device (3), preferably adjacent to a connection of a suction line (32) of the suction device (3) to the outlet (2).

5. Device (1) according to any of the preceding claims, **characterised in that** the suction device (3) has an extraction fan (30) and/or the outlet (2) has a pump (20) for pumping out cleaning medium.

6. Device (1) according to any of the preceding claims, **characterised in that** in the isolator chamber (10) a closer (6) is arranged with cover gassing for closing the containers and/or **in that** a filler (5) is arranged in the isolator chamber (10).

7. Device (1) according to any of the preceding claims, **characterised in that** the outlet (2) has a housing for receiving ejected containers, wherein the housing (4) comprises:
an inlet opening (41) arranged on the upper side (40) of the housing (4) which inlet opening communicates with the isolator chamber (10),
an outlet opening (42) arranged in the lower region of the housing (4) for discharging fluid,
a container guide (43) arranged in the housing (4) at least between inlet opening (41) and outlet opening (42), and
a closable removal opening (44).

8. Device (1) according to claim 7, **characterised in that** the housing (4) is integrated with the isolator chamber (10).

9. Device (1) according to claim 7 or 8, **characterised in that** the container guide (43) is configured as a grid or in the form of a plurality of rods.

10. Device (1) according to any of claims 7 to 9, **characterised in that** the container guide (43) has a downward slope (G) in the direction of the removal opening (44) and/or a bottom (46) of the housing (4) has a downwards slope (G) in the direction of the outlet opening (42).

11. Device (1) according to any of claims 7 to 10, **characterised in that** the inlet opening (41) has an inlet closing device for at least intermittently interrupting the communication with the isolator chamber (10).

12. Device (1) according to claim 6, **characterised in that** the filler (5) and the closer (6) are arranged jointly in the isolator chamber (10).

13. Device (1) according to claim 6, **characterised in that** the isolator chamber (10) is divided into a filler chamber (50) for accommodating the filler (5) and a closer chamber (60) for accommodating the closer (6).

14. Device (1) according to any of the preceding claims, **characterised in that** a preform blowing device is provided for stretch blow moulding plastic preforms upstream of the container path of the filler (5).

15. Device (1) according to any of the preceding claims, **characterised in that** more than one housing (4) is provided, wherein the outlet (2) is connected to the outlet opening (41) of more than one, preferably each, housing (4).

## Revendications

1. Dispositif (1) pour traiter des récipients, comprenant une chambre d'isolation (10) dans laquelle le traitement des récipients a lieu, et un écoulement (2) relié au fond de la chambre d'isolation (10) pour évacuer des liquides, dans lequel
un dispositif d'aspiration (3) pour aspirer les gaz de la chambre d'isolation (10) est relié à l'écoulement (2),
dans lequel
un dispositif pour préparer le milieu de nettoyage est agencé en aval de l'écoulement (2), **caractérisé en ce que**
l'écoulement (2) présente, en aval du raccordement du dispositif d'aspiration (3), une vanne d'écoulement (22) pour fermer l'écoulement (2) entre des intervalles de nettoyage du dispositif (1).

2. Dispositif (1) selon la revendication 1, **caractérisé en ce que** le dispositif pour préparer le milieu de nettoyage est une installation CIP.

3. Dispositif (1) selon la revendication 1 ou 2, **caractérisé en ce qu**'une vanne d'écoulement (22) est agencée entre le dispositif d'aspiration (3) et l'écoulement (2) pour établir ou bloquer la communication entre l'écoulement (2) et le dispositif d'aspiration (3).

4. Dispositif (1) selon l'une quelconque des revendications précédentes, **caractérisé en ce qu**'une conduite d'aspiration (32) du dispositif d'aspiration (3) présente une pente (G) dans la direction du raccordement à l'écoulement (2) et/ou un séparateur d'eau pour séparer l'humidité est agencé sur le dispositif d'aspiration (3), de préférence de manière adjacente à un raccordement d'une conduite d'aspiration (32) du dispositif d'aspiration (3) au niveau de l'écoulement (2).

5. Dispositif (1) selon l'une quelconque des revendications précédentes, **caractérisé en ce que** le dispositif d'aspiration (3) présente un ventilateur d'aspiration (30) et/ou l'écoulement (2) présente une pompe (20) pour pomper le milieu de nettoyage.

6. Dispositif (1) selon l'une quelconque des revendications précédentes, **caractérisé en ce qu'un** dispositif de fermeture (6) avec gazage de couvercle pour fermer les récipients est agencé dans la chambre d'isolation (10) et/ou **en ce qu'**un dispositif de remplissage (5) est agencé dans la chambre d'isolation (10).

7. Dispositif (1) selon l'une quelconque des revendications précédentes, **caractérisé en ce que** l'écoulement (2) présente un logement (4) pour recevoir les récipients déchargés, dans lequel le logement (4) comprend
une ouverture d'entrée (41) agencée sur la partie supérieure (40) du logement (4), qui communique avec la chambre d'isolation (10),
une ouverture d'écoulement (42) agencée dans la zone inférieure du logement (4) pour l'évacuation du liquide,
un guide de récipient (43) agencé dans le logement (4) au moins entre l'ouverture d'entrée (41) et l'ouverture d'écoulement (42), et
une ouverture de prélèvement (44) pouvant être fermée.

8. Dispositif (1) selon la revendication 7, **caractérisé en ce que** le logement (4) est intégré à la chambre d'isolation (10).

9. Dispositif (1) selon la revendication 7 ou 8, **caractérisé en ce que** le guide de récipient (43) est réalisé comme une plaque en treillis ou sous la forme d'une pluralité de barres.

10. Dispositif (1) selon l'une quelconque des revendications 7 à 9, **caractérisé en ce que** le guide de récipient (43) présente une pente (G) dans la direction de l'ouverture de prélèvement (44) et/ou un fond (46) du logement (4) présente une pente (G) dans la direction de l'ouverture d'écoulement (42).

11. Dispositif (1) selon l'une quelconque des revendications 7 à 10, **caractérisé en ce que** l'ouverture d'entrée (41) présente une fermeture d'entrée pour interrompre au moins temporairement la communication avec la chambre d'isolation (10).

12. Dispositif (1) selon la revendication 6, **caractérisé en ce que** le dispositif de remplissage (5) et le dispositif de fermeture (6) sont agencés ensemble dans la chambre d'isolation (10).

13. Dispositif (1) selon la revendication 6, **caractérisé en ce que** la chambre d'isolation (10) est divisée en une chambre de remplissage (50) pour accueillir le dispositif de remplissage (5) et une chambre de fermeture (60) pour accueillir le dispositif de fermeture (6).

14. Dispositif (1) selon l'une quelconque des revendications précédentes, **caractérisé en ce qu'un** dispositif de soufflage de préformes pour le soufflage par étirement de préformes en plastique est prévu en amont du dispositif de remplissage (5) dans le trajet du récipient.

15. Dispositif (1) selon l'une quelconque des revendications précédentes, **caractérisé en ce que** plus d'un logement (4) est prévu, dans lequel l'écoulement (2) est relié à l'ouverture d'écoulement (41) de plus d'un, de préférence chaque, logement (4).
